# EUROPEAN PATENT APPLICATION

(11) **EP 2 144 442 A2**
(43) Date of publication of application: **13.01.2010**
(21) Application number: 09154544.2
(22) Date of filing: 06.03.2009
(51) Int. Cl.: H04N 7/173, H04N 5/44

(54) **Video processing apparatus, video processing system including the same, and information providing method in video processing apparatus**

(30) Priority: 10.07.2008 KR 20080067273
(71) Applicant: Samsung Electronics Co., Ltd., Suwon-si Gyeonggi-do 443-742 (KR)
(72) Inventor: YOON, Yeo-ri, Suwon-si, Gyeonggi-do (KR); KWON, Yong-hwan, Gyeonggi-do (KR); LEE, Sang-hee, Seoul (KR); LEE, Jeong-yeon, Gyeonggi-do (KR); PARK, Mi-ju, Seoul (KR); KIM, Won-il, Gyeonggi-do (KR); HWANG, Woo-seok, Seoul (KR)
(74) Representative: Davies, Robert Ean

(57) **Abstract**

There are provided a video processing apparatus (120), a video processing system, and an information providing method in th e video processing apparatus. The video processing apparatus includes: a communication part (121) performing communication with a service providing server (110) providing broadcasting services; a video processing part (122) performing video processing with respect to the broadcasting services; an output part (125) outputting information on the broadcasting services; and a controller controlling the communication part, the output part and the video processing part to transmit user information and viewing information with respect to the video processing apparatus to the service providing server, to receive recommendation information based on the user information and the viewing information from the service providing server, an d to output the received recommendation information, respectively.

## Description

The present invention relates to a video processing apparatus, a video processing system including the same and an information providing method in the video processing apparatus in which broadcasting services are provided through a communication network.

Recently, Internet communication environments and broadcasting environments tend to be integrated each other. In this respect, a video processing apparatus such as an IPTV (Internet Protocol Television) is under the spotlight in current network environments.

This video processing apparatus provides a user with contents such as broadcasting programs, videos, audios, texts and data received from a service providing server through an IP-based network. Hereinafter, the contents providing will be referred to as 'broadcasting services'. The contents are transmitted in a packet transmission method through high speed Internet such as ADSL (Asymmetric Digital Subscriber Line) or FTTH (Fiber To The Home). Thus, services which have been conventionally provided in Internet communication environments can be provided for a user through a video processing apparatus.

However, conventional broadcasting services are too limited and inconvenient to meet various user demands since a service providing server unilaterally provides information for a user. Accordingly, broadcasting services capable of enhancing user convenience are desirable.

Accordingly, it is an aim of embodiments of the present invention to provide a video processing apparatus, a video processing system and an information providing method in the video processing apparatus which can conveniently meet various user demands.

Additional aspects of embodiments of the present invention will be set forth in part in the description which follows and, in part, will be obvious from the description, or may be learned by practice of the present invention.

According to an aspect of the present invention there is provided an information providing method in a video processing apparatus, including: transmitting user information with respect to the video processing apparatus to a service providing server; transmitting viewing information of a user from the video processing apparatus to the service providing server; receiving recommendation information based on the user information and the viewing information from the service providing server, by the video processing apparatus; and outputting t h e received recommendation information by the video processing apparatus.

The viewing information may preferably include a broadcast being viewed in the video processing apparatus.

The received recommendation information may preferably include information on a recommended program corresponding to the broadcast being viewed.

The recommendation information may preferably be transmitted after th e broadcast is viewed fo r a predetermined time.

The user information may preferably be transmitted from the video processing apparatus or a computer to the service providing server.

The user information may preferably be transmitted when the user of the video processing apparatus is registered in the service providing server.

The user information may preferably be transmitted when an application program of the video processing apparatus is downloaded from the service providing server to the video processing apparatus.

The outputting the recommendation information may preferably include outputting th e recommendation information in at least one format of PIP, browser windows, texts and audios or other means.

According to another aspect of the present invention there is provided a video processing apparatus including: a communication part performing communication with a service providing server providing broadcasting services; a video processing part performing video processing with respect to the broadcasting services; an output part outputting information on the broadcasting services; and a controller controlling the communication part, the output part and the video processing part to transmit user information and viewing information with respect to the video processing apparatus to the service providing server, to receive recommendation information based on the user information and the viewing information from the service providing server, an d to output the received recommendation information, respectively.

The viewing information may preferably include information on a broadcast being viewed.

The received recommendation information may preferably include information on a recommended program corresponding to the broadcast being viewed.

The recommendation information may preferably be received after the broadcast is viewed for a predetermined time.

The user information may preferably be transmitted when a user of the video processing apparatus is registered in the service providing server.

The user information may preferably be transmitted when an application program of the video processing apparatus is downloaded from the service providing server to the video processing apparatus.

Th e output part may preferably output the recommendation information in at least one format of PIP, browser windows, texts and audios.

According to another aspect of the present invention there is provided a video processing system including: a computer; and a video processing apparatus, the computer transmitting user information with respect to the video processing apparatus inputted from a user to a service providing server providing broadcasting services, the video processing apparatus transmitting viewing information to the service providing server, receiving recommendation information based on the user information and the viewing information from the service providing server, and outputting the received recommendation information.

According to embodiments of the present invention, broadcasting services capable of conveniently meeting various user demands can be provided.

For a better understanding of the invention, and to show how embodiments of the same may be carried into effect, reference will now be made, by way of example, to the accompanying diagrammatic drawings in which:
FIG. 1 illustrates a service providing server and a video processing apparatus according to an exemplary embodiment of the present invention;
FIG. 2 illustrates a service providing server and a video processing apparatus according to another exemplary embodiment of the present invention;
FIG. 3A illustrates recommendation information according to an exemplary embodiment of the present invention;
FIG. 3B illustrates recommendation information according to another exemplary embodiment of the present invention;
FIG. 4 illustrates a process of providing information on a video processing apparatus according to an exemplary embodiment of the present invention;
FIG. 5 illustrates a process of providing information on a video processing apparatus according to another exemplary embodiment of the present invention;
FIG. 6 illustrates a video processing system according to an exemplary embodiment of the present invention.

Reference will now be made in detail to the embodiments of the present invention, examples of which are illustrated in the accompanying drawings, wherein like reference numerals refer to like elements throughout. The exemplary embodiments are described below so as to explain the present invention by referring to the figures.

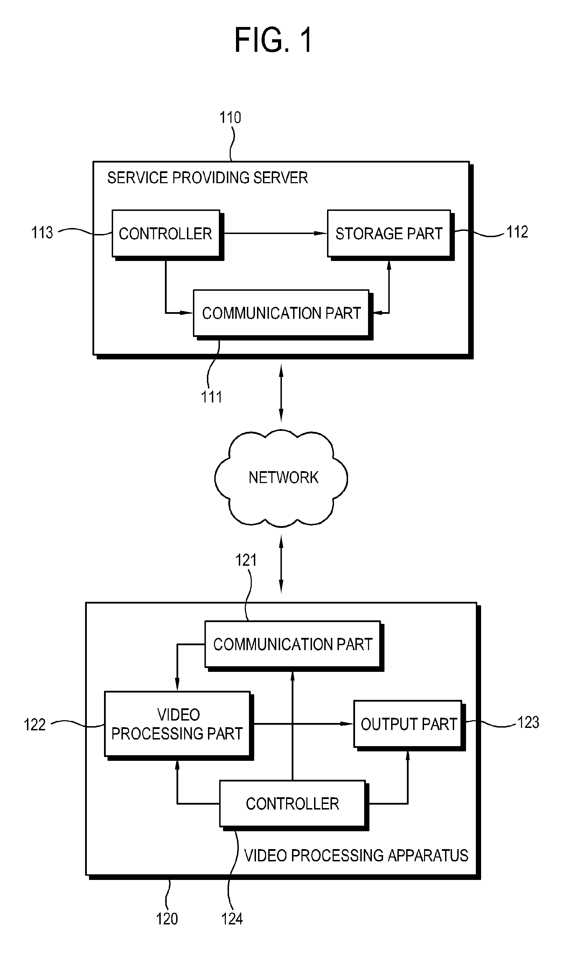

FIG. 1 illustrates a service providing server and a video processing apparatus according to an exemplary embodiment of the present invention.

Referring to FIG. 1, a service providing server 110 performs communication with a video processing apparatus 120 to provide broadcasting services for video processing apparatus 120 according to request of the video processing apparatus 120. In this respect, the service providing server 110 may include an ISP (Internet Service Provider).

Contents contained in broadcasting services of the service providing server 110 may include broadcasting programs, video files, audio files, text files and software.

The video processing apparatus 120 can receive broadcasting services provided from the service providing server 110. The video processing apparatus 120 processes a video signal received from the service providing server 110, and displays a video based on the processed video signal. The video processing apparatus 120 may be embodied as a digital television, a set-top box, a desktop computer, a laptop computer, a mobile terminal, a PDA (Personal Digital Assistance), a PDP (Plasma Display Panel), or the like. In this respect, the video processing apparatus according to the present embodiment may include any apparatus which has an Internet function, that is, an interactive communication function and a video processing function.

Hereinafter, the service providing server 110 and the video processing apparatus 120 will be described in more detail.

The service providing server 111 may include a communication part 111, a storage part 112, and a controller 113.

The communication part 111 performs communication with the video processing apparatus 120, and receives user information and viewing information from the video processing apparatus 120.

The user information refers to information about a user of the video processing apparatus 120, and may include personal identification data, preferred broadcasting genres, preferred channels, preferred programs, preferred time zones, etc. More specifically, the user information may include a user ID, password, name, resident registration number, e-mail address, home address, home phone number, mobile phone number, favorite, occupation, birthday, single or married, etc.

The viewing information includes information about a broadcast which is being viewed by a user through the video processing apparatus 120. More specifically, the viewing information may include a currently accessed channel, a selected program, access time, genre, etc.

The storage part 112 stores the user information transmitted from the video processing apparatus 120. The storage part 112 may further store the viewing information transmitted from the video processing apparatus 120.

The controller 113 controls the communication part 111 to transmit recommendation information based on the user information stored in the storage part 112 and the received viewing information to the video processing apparatus 120. In this respect, the controller 113 may provide the recommendation information when receiving the viewing information from the video processing apparatus 120.

The recommendation information may include information about recommended programs with respect to a broadcast being currently viewed by a user.

The video processing apparatus 120 may include a communication part 121, a video processing part 122, an output part 123 and a controller 124.

The communication part 121 performs communication with the service providing server 110 providing broadcasting services under the control of the controller 124, and transmits user information and viewing information with respect to the video processing apparatus 120 to the service providing server 110.

The video processing part 122 performs video processing with respect to contents received from the service providing server 110. The video processing includes at least one of decoding, scaling, image enhancement, brightness adjustment and contrast adjustment, etc.

The output part 123 outputs recommendation information received from the service providing server 110 under the control of th e controller 124. Th e recommendation information may be outputted in at least one format of PIP (picture in picture), browser windows, texts, audios and etc. The output pat 123 may include at least one of a display part (not shown) and an audio output part (not shown), corresponding to the output format.

The display part of the output part 123 may display a video processed by the video processing part 122.

The output format of the recommendation information may be selected by a user. For example, if the user wants to simultaneously view a program corresponding to the recommendation information in a sub screen together with a currently viewing screen, the user may select the PIP format for output of the recommendation information. If the user wants to view only a title of the program corresponding to the recommendation information, the user may select the texts format. In this way, the user may be provided with the recommendation information in her/his desired format.

The controller 124 controls the communication part 121, the video processing part 122 and the output part 123 to transmit user information and viewing information with respect to the video processing apparatus 120 to the service providing server 110, to receive recommendation information based on the user information and the viewing information from the service providing server 110, and to output the received recommendation information, respectively.

More specifically, the controller 124 may control to transmit the user information to the service providing server 110 when a user of the video processing apparatus 120 is registered in the service providing server 110. Alternatively, the user information may be transmitted when an application program of the video processing apparatus 120 is downloaded.

Further, the controller 124 may control to transmit the viewing information during viewing a broadcast. Alternatively, the controller 124 may control to transmit the viewing information after a broadcast is on air viewed for a predetermined time. In this case, the video processing apparatus 12 0 receives the recommendation information after th e broadcast is on air for the predetermined time.

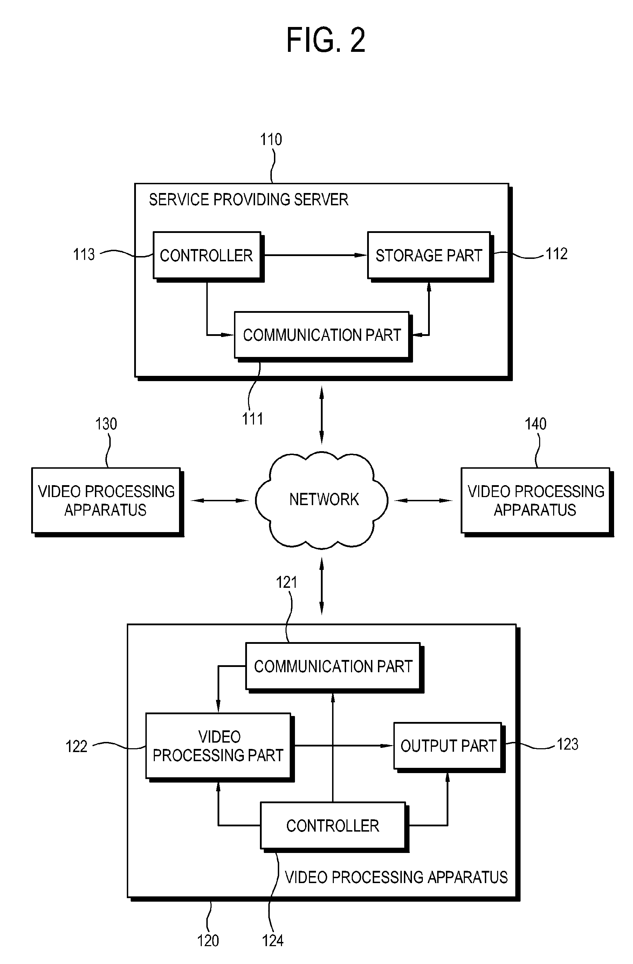

FIG. 2 illustrates a service providing server and a video processing apparatus according to another exemplary embodiment of the present invention.

Referring to FIG. 2, a service providing server 110 may receive user information and viewing information from a plurality of video processing apparatuses 120, 130 and 140. The service providing server 110 obtains user group information by analyzing the user information received from the plurality of video processing apparatuses 120, 130 and 140.

Then, if any one video processing apparatus (for example, 120) requests broadcasting services and transmits the viewing information, the service providing server 110 provides recommendation information based on the user group information and the viewing information to the video processing apparatus 120.

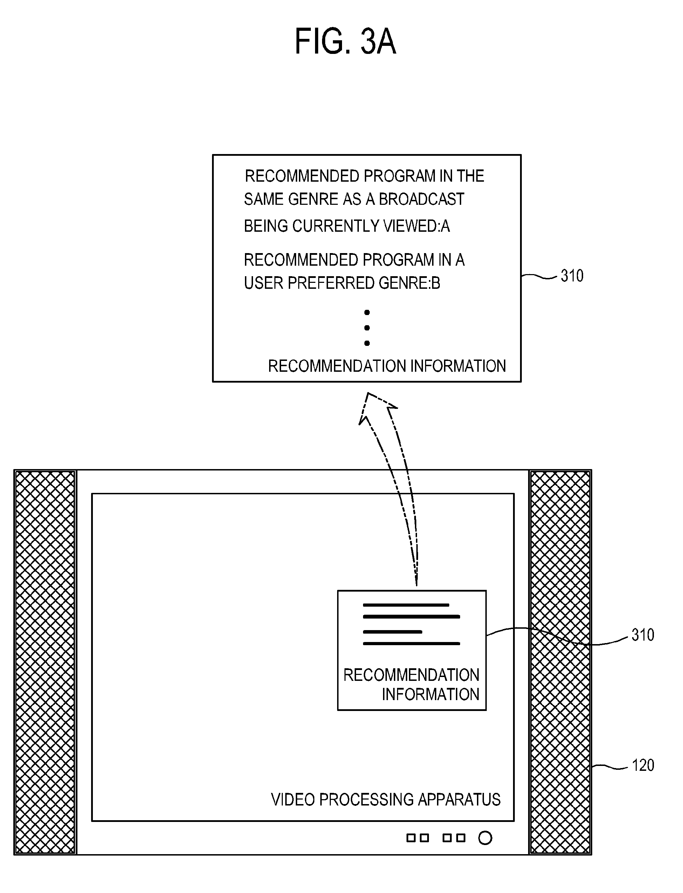

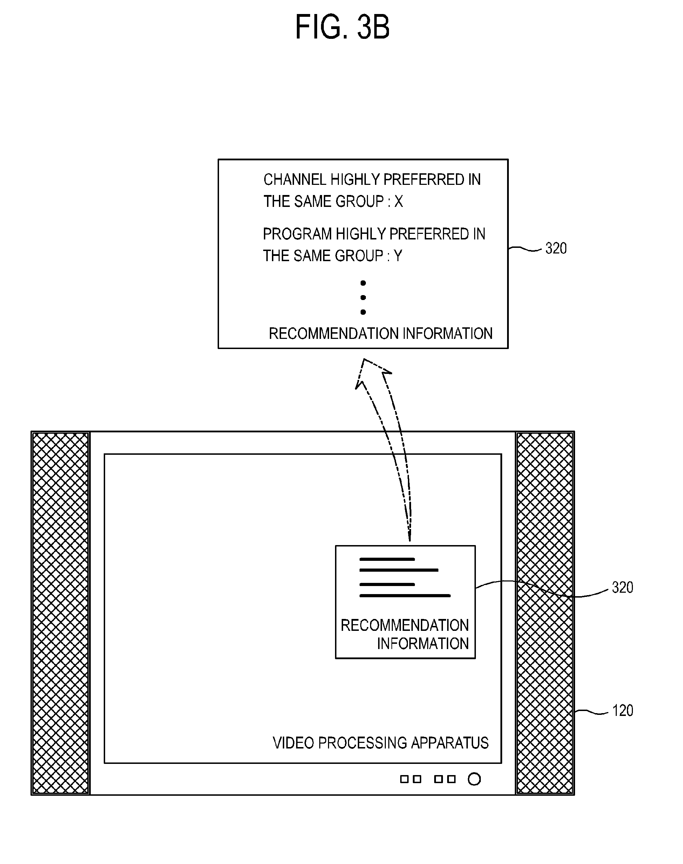

FIG. 3A illustrates recommendation information according to an exemplary embodiment of the present invention; an d FIG. 3B illustrates recommendation information according to another exemplary embodiment of the present invention.

The service providing server 110 receives viewing information from the video processing apparatus 120 and provides recommendation information with respect to the viewing information referring to stored user information.

Referring to FIG. 3A, if the service providing server 110 receives user information and viewing information from the video processing apparatus 120, the service providing server 110 provides recommendation information 310 to the video processing apparatus 120. As shown in FIG. 3A, the recommendation information 310 may include information on a recommended program in the same genre as a currently viewing broadcast, a recommended program in a user preferred genre, or the like.

Referring to FIG. 3B, if user information is received from the plurality of video processing apparatuses 120, 130 and 140, the service providing server 110 may provide recommendation information 320 based on us e r group information obtained based on the received user information and viewing information. As shown in FI G . 3B, the recommendation information 320 may include information on a channel highly preferred in the same user group, a program highly preferred in the same user group, etc. The user group may be based upon one or combination of age, gender, location, and other user information. The recommendation may be made based simply upon the group or the viewing information of the viewer herself or others; however recommendation may be made based upon the combination of the group and the viewing information such as a recommendation based upon the fact that a particular age group corresponding to the viewer's age is currently viewing a certain program.

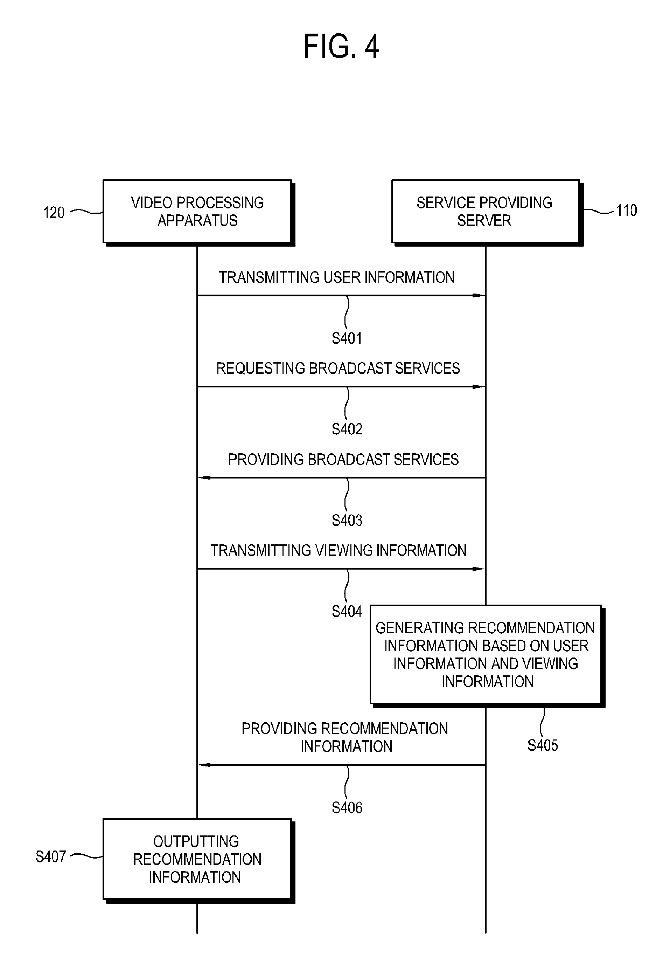

FIG. 4 illustrates a process of providing information with respect to a video processing apparatus according to an exemplary embodiment of the present invention.

The video processing apparatus 120 transmits user information to the service providing server 110 (S401). The video processing apparatus 120 may transmit the user information to the service providing server 110 when a user is registered in the service providing server 110, or when an application program of the video processing apparatus 120 is downloaded. The user information includes personal identification data, preferred broadcast genres, preferred channels, preferred programs, preferred time zones, etc.

The video processing apparatus 120 requests the service providing server 110 broadcasting services (S402). Then, the service providing server 11 0 provides broadcasting services for the video processing apparatus 120 (S403).

The video processing apparatus 120 transmits information on a broadcast being viewed by a user, that is, viewing information (S404). The viewing information includes a currently accessed channel, a selected program, access time, etc. In this respect, the video processing apparatus 120 may transmit the viewing information during viewing a broadcast, or after a broadcast is on air for a predetermined time.

The service providing server 11 0 generates recommendation information based on the user information and the viewing information (S405). Accordingly, a user can receive recommendation information reflecting her/his broadcast viewing preferences.

The recommendation information may be provided when the video processing apparatus 120 transmits the viewing information. That is, since the recommendation information is generated based on user's current viewing information, broadcast viewing preferences of a user can be suitably and exactly reflected.

The recommendation information may include information on a recommended program with respect to a broadcast being currently viewed by a user.

The service providing server 110 provides the generated recommendation information for th e video processing apparatus 120 (S406). The video processing apparatus 120 outputs and displays the recommendation information on a screen (S407). In this respect, the recommendation information may be outputted in at least one format of PIP, browser windows, texts and audios.

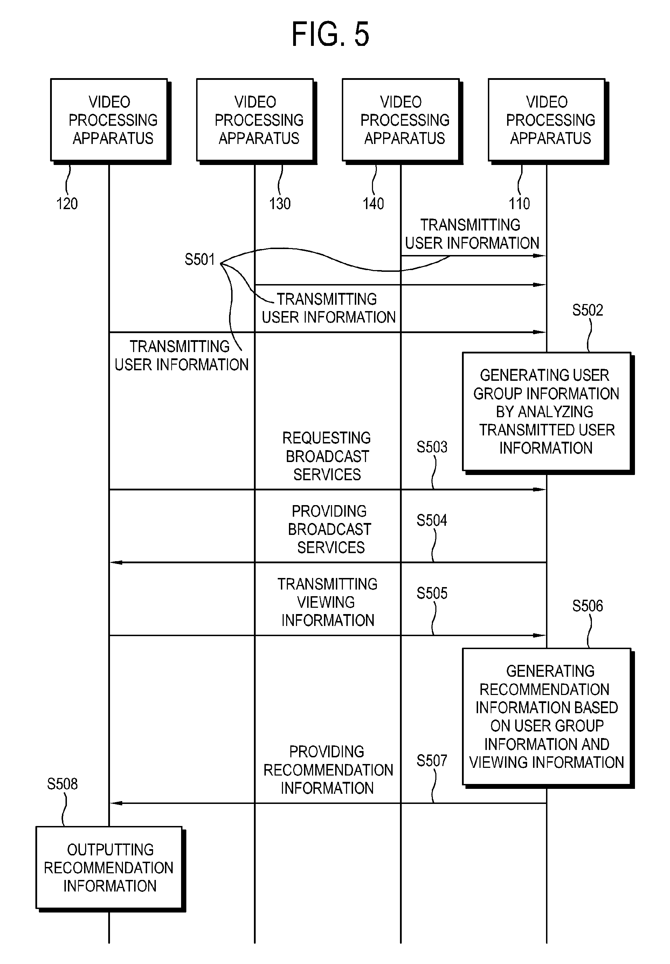

FIG. 5 illustrates a process of providing information on a video processing apparatus according to another exemplary embodiment of the present invention.

First, the service providing server 110 receives user information from the plurality of video processing apparatuses 120, 130 and 140 (S501). The respective video processing apparatuses 120, 130 and 140 may transmit the user information when a user is registered in the service providing server 110 or when an application program of any one video processing apparatus (for example, 120) is downloaded.

The service providing server 110 generates user group information by analyzing the user information received from the plurality of video processing apparatuses 120, 130 and 140 (S502).

One video processing apparatus 120 among the plurality of video processing apparatuses 120, 130 and 140 requests broadcasting services of the service providing server 110 (S503). Then, the service providing server 110 provides broadcasting services for the video processing apparatus 120 (S504).

T h e video processing apparatus 1 2 0 transmits information on a broadcast being viewed by a user, that is, viewing information to the service providing server 110 (S505). The viewing information includes a currently accessed channel, a selected program, access time, etc. In this respect, the video processing apparatus 120 may transmit the viewing information during viewing a broadcast or after a broadcast is on air for a predetermined time.

The service providing server 110 generates recommendation information based on the user group information and the viewing information (S506). The recommendation information may include information on channels and programs preferred by a group to which a user belongs, etc. As stated earlier, the recommendation may also be made based simply upon the group which the viewer belongs to (without consideration of what others in the same group is currently viewing) or the viewing information of the viewer herself or others (without consideration of group which the viewer belongs to); however, the recommendation may be made based upon the combination of the group and the viewing information of the others in the same group. Furthermore, the recommendation may be made based upon a different group than the group which the viewer belongs to or based upon also considering what others in the different group are viewing.

The service providing server 110 provides the generated recommendation information for th e video processing apparatus 120 (S507). The video processing apparatus 120 outputs and displays the recommendation information on a screen (S508). The recommendation information may be outputted in at least one format of PIP, browser windows, texts and audios.

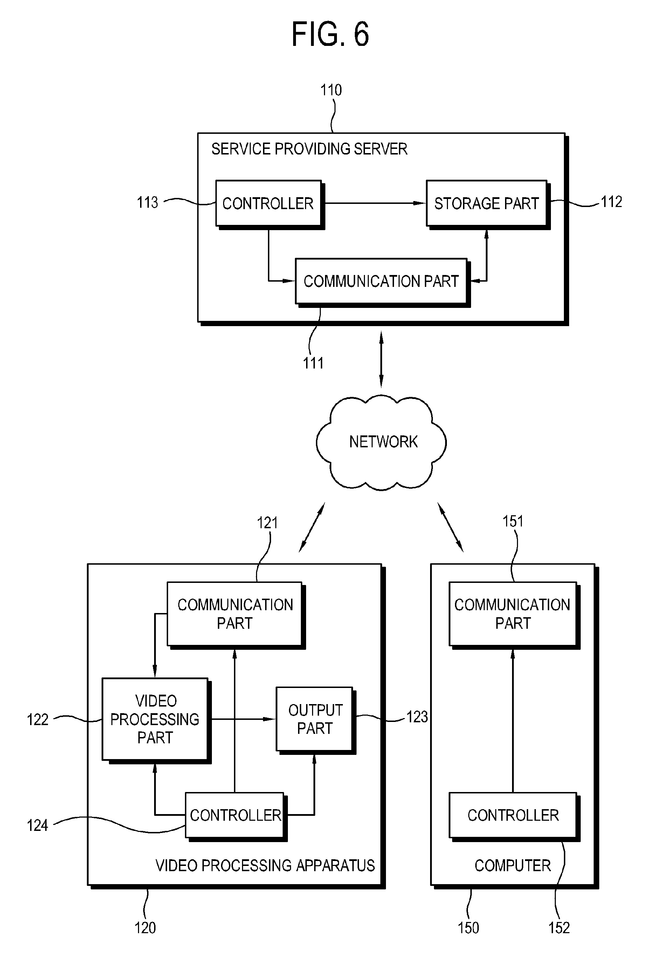

FIG. 6 illustrates a video processing system according to an exemplary embodiment of the present invention.

Referring to FIG. 6, the video processing system may include the above-described service providing server 110, the above-described video processing apparatus 120, and a computer 150.

The service providing server 110 performs communication with the video processing apparatus 120 and the computer 150. In this respect, the service providing server 110 receives user information from the computer 150, and receives viewing information from the video processing apparatus 120. Then, the service providing server 110 transmits recommendation information based on the user information and the viewing information to the video processing apparatus 120.

The video processing apparatus 120 transmits the viewing information of the video processing apparatus 120 to the service providing server 110, receives the recommendation information based on the user information and the viewing information from the service providing server 110, and outputs received recommendation information.

The computer 150 may include a communication part 151 and a controller 152.

The communication part 151 performs communication with the service providing server 110 under the control of the controller 152, and transmits user information of the video processing apparatus 120 inputted by a user to the service providing server 110. In this respect, the user can input the user information through user interface connected to the computer 150.

The controller 152 controls the communication part 151 to transmit the inputted user information to the service providing server 110.

Although a few exemplary embodiments of the present invention have been shown and described, it will be appreciated by those skilled in the art that changes may be made in these embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An information providing method in a video processing apparatus (120), comprising:
transmitting (S401) user information with respect to the video processing apparatus to a service providing server;
transmitting (S404) viewing information of a user from the video processing apparatus to the service providing server;
receiving (S406) recommendation information (320) based on the user information and the viewing information from the service providing server, by the video processing apparatus; and
outputting (S407) the received recommendation information by the video processing apparatus.

2. The method according to claim 1, wherein the viewing information comprises a broadcast being viewed in the video processing apparatus.

3. The method according to claim 2, wherein the received recommendation information comprises information on a recommended program corresponding to the broadcast being viewed.

4. The method according to claim 1, 2 or 3, wherein the recommendation information is transmitted after the broadcast is viewed for a predetermined time.

5. The method according to any preceding claim, wherein the user information is transmitted from the video processing apparatus (120) or a computer to the service providing server (110).

6. The method according to claim 1, wherein the user information is transmitted when the user of the video processing apparatus is registered in the service providing server or an application program of the video processing apparatus is downloaded from the service providing server to the video processing apparatus.

7. The method according to any preceding claim, wherein the outputting the recommendation information comprises outputting the recommendation information in at least one format of PIP, browser windows, texts and audios.

8. The method according to any preceding claim, wherein the recommendation information is based upon the viewing information of others in the same group as the viewer or the viewing information of others in the different group from the viewer, the group being based upon the user information.

9. The method according to any preceding claim, wherein the group is based upon one or combination of age, gender and location of the viewer.

10. The method according to any preceding claim, wherein the viewing information is the channel information or the genre information of the current channel viewed by the viewer.

11. A video processing apparatus (120) comprising:
a communication part (121) performing communication with a service providing server (110) providing broadcasting services;
a video processing part (122) performing video processing with respect to the broadcasting services;
an output part (123) outputting information on the broadcasting services; and
a controller (124) controlling the communication part, the output part and the video processing part to transmit user information and viewing information with respect to the video processing apparatus to the service providing server, to receive recommendation information based on the user information and the viewing information from the service providing server, and to output the received recommendation information, respectively.

12. The video processing apparatus according to claim 11, wherein the viewing information comprises information on a broadcast being viewed.

13. The video processing apparatus according to claim 12, wherein the received recommendation information comprises information on a recommended program corresponding to the broadcast being viewed.

14. The video processing apparatus according to claim 11, 12 or 13, wherein the recommendation information is received after the broadcast is viewed for a predetermined time.

15. The video processing apparatus according to any of claims 11-14, wherein the output part outputs the recommendation information in at least one format of PIP, browser windows, texts and audios.
